# EUROPÄISCHE PATENTSCHRIFT

(11) **EP 3 972 233 B1**
(45) Veröffentlichungstag und Bekanntmachung des Hinweises auf die Patenterteilung: **15.05.2024**
(21) Anmeldenummer: 21157586.5
(22) Anmeldetag: 17.02.2021
(51) Int. Cl.: H04N 1/60

(54) **VERFAHREN ZUR AUTOMATISIERTEN CHARAKTERISIERUNG EINES KONTINUIERLICHEN DRUCKSYSTEMS**
METHOD FOR THE AUTOMATED CHARACTERISATION OF A CONTINUOUS PRINTING SYSTEM
PROCÉDÉ DE CARACTÉRISATION AUTOMATISÉE D'UN SYSTÈME D'IMPRESSION EN CONTINU

(30) Priorität: 21.09.2020 EP 20197208; 08.10.2020 EP 20200816
(43) Veröffentlichungstag der Anmeldung: 23.03.2022
(73) Patentinhaber: Improve Process Analytics and Control GmbH, 9524 Villach (AT)
(72) Erfinder: BERGMANN, Bernd, 30900 Wedemark (DE); BRENNER, Michael, 9500 Villach (AT); PRESTERL, Andreas, 9131 Grafenstein (AT); SALLINGER, Christian, 9500 Villach (AT)
(74) Vertreter: Cohausz & Florack

(56) Entgegenhaltungen:
- EP-A1- 2 651 112
- EP-A1- 3 578 939
- WO-A1-2019/147247
- DE-A1-102018 219 138

## Beschreibung

Die Erfindung betrifft ein Verfahren zur automatisierten Charakterisierung eines kontinuierlichen Drucksystems, wobei die Charakterisierung des Drucksystems verbessert werden soll. Beinhaltet in der Erfindung ist auch ein Verfahren zur Herstellung einer Farbchartdatei zur Charakterisierung eines Drucksystems.

In der Druckindustrie ist eines der wesentlichen Ziele die Erzeugung möglichst gleicher Bild- und Farbeneindrücke der zu bedruckenden Materialien. Die sogenannte Farbkonstanz auch beim Druck unterschiedlicher Chargen auf unterschiedlichen Trägermaterialien soll möglichst immer gleich aussehen. Dies gilt insbesondere dann, wenn Corporate Identity gewünscht ist. Die von einer Firma gewählte Farbe bzw. die gewählten Farben sollen immer gleich aussehen, unabhängig davon, ob auf Glas, Papier, Kunststoff oder einem anderen Trägermaterial gedruckt wird. Das möglichst identische Aussehen der Druckprodukte ist gewünscht und somit ein Ziel der Druckindustrie.

Druckverfahren, Drucker, Druckfarbe und vor allem das Trägermaterial haben einen großen Einfluss darauf, wie ein Druckergebnis, das auf der Basis einer Druckdatei gedruckt worden ist, im ausgedruckten Zustand aussieht. Unter Druckfarbe wird jedes Druckmedium unter anderem wie Tinte oder Toner verstanden, mit dem Farbpigmente auf das Trägermaterial aufgebracht werden.

Dieselbe Druckdatei sieht im gedruckten Zustand auf einem glänzenden Papier anders aus als auf einem matten Papier. Ebenso beeinflusst der Unterschied von glatten Oberflächen zu rauen oder strukturierten Oberflächen das optische Ergebnis wesentlich. Während glänzende Ausdrucke über hohe Kontraste und gesättigte Farben verfügen, wirken matte doch deutlich kontrastärmer, weniger farbig und oft etwas warmtoniger. Diese Bildwirkung ist die Folge der unterschiedlichen Eigenschaften der verschiedenen Druckmaterialien und Druckverfahren. Je nach Untergrund wird das Druckergebnis Dekor oder Design genannt. Im Folgenden wird das Druckergebnis einheitlich Dekor genannt.

Gleichwohl soll eine möglichst gleiche Farbwirkung erreicht werden. Um den diversen Einflüssen durch Druckverfahren, Drucker, Druckfarbe und Trägermaterial gerecht zu werden, nutzt man die Möglichkeiten diverser Software-Tools und Programme in der Bildbearbeitung im Hinblick darauf, die Eigenschaften des Drucksystems bereits vor dem Druck durch eine geeignete Charakterisierung zu optimieren. Dieser Prozess wird insgesamt auch Farbmanagement genannt.

Oftmals lassen sich die genannten Eigenschaften des Trägermaterials, des Druckverfahrens und/oder der eingesetzten Druckfarben nicht ändern, sie müssen daher durch eine Einstellung des Druckers ausgeglichen werden. So kann auf einem cremeweißen Papier nicht per Software eine reinweiße Fläche dargestellt werden, da zur Erzeugung der weißen Flächen ein herkömmlicher Tintenstrahldrucker keine Druckfarbe auf die Fläche drucken kann. Ein helleres Weiß als den Farbton des zu bedruckenden Materials kann man nicht mit den in der Regel zur Verfügung stehenden Druckfarben (CMYK - Cyan Magenta Yellow Key(Black)) erreichen. Genauso bei der Druckfarbe Schwarz. Auch wenn mit dem Drucker maximal viel schwarze Druckfarbe auf ein Trägermaterial wie eine Leinwand gedruckt worden ist, kann dann, wenn der Ausdruck getrocknet ist, die schwarze Fläche immer nur wie ein dunkles Grau aussehen.

Wenn diese Eigenschaften nicht veränderbar sind, ist es erforderlich, das Farbmanagement für eine bestmögliche Annäherung an die zu erreichende Farbe bzw. die zu erreichenden Farben anzupassen. Dazu werden die für den Druck benötigten Charakterisierungsdateien vorab angepasst, dem Drucksystem zur Verfügung gestellt und somit die Optimierung erreicht.

Dazu ist es erforderlich, mit dem Bildbearbeitungsprogramm den Druck simulieren zu können. Dazu müssen die spezifischen Eigenschaften der Kombination aus Drucker, Druckfarbe und Druckmaterial bekannt sein, die in einem sogenannten ICC-Profil (ICC: International Color Consortium) gespeichert werden und die die Bildbearbeitungssoftware in die Lage versetzen, die Wirkung des Ausdrucks in der Softproofansicht auf einem profilierten Bildschirm zu simulieren.

Ein ICC-Profil oder auch Farbprofil ist ein genormter Datensatz, der den Farbraum eines Farbwiedergabegeräts beschreibt, z. B. eines Monitors, Druckers oder Scanners. Ziel eines konsequent eingesetzten Farbmanagements ist, dass eine Vorlage, die mit einem beliebigen Eingabegerät erfasst wurde, an anderen Ausgabegeräten möglichst ähnlich wiedergegeben wird.

Für eine Charakterisierung eines Druckers wird daher zunächst mindestens ein Farbchart, mit etlichen charakteristischen Farben auf einem Trägermaterial ausgedruckt. Ein typisches Farbchart ist einerseits eine Vielzahl von beispielsweise 250 Farbflächen mit unterschiedlichen Einzelfarben in einem Raster. Andererseits können Farbverläufe der eingesetzten Einzelfarben mit Abstufungen der Auftragsmengen in 1%-Schritten als Farbchart gedruckt werden. Die Einzelfarben sind beispielsweise die üblichen Druckfarben CMYK (Cyan, Magenta, Yellow, Key (Black)).

Das Farbchart stellt somit die Ist-Werte der Farben dar, die dann mit einem Spektralfotometer gemessen und vom Rechner mit den Soll-Farbwerten eines Referenz-Farbcharts verglichen werden. Dazu wird eine Differenzanalyse durchgeführt und ein ICC-Profil in Form einer Datei erzeugt, die man auch als Farb-Identitätsdatei eines Druckers bezeichnen kann.

Wird ein Farbchart mit einer Vielzahl von Farben verwendet, dann kann das Zusammenwirken der verschiedenen Farben ausgewertet werden und eine Profilierung als eine Form der Charakterisierung vorgenommen werden.

Wird ein Farbchart mit Farbverläufen verwendet, kann eine Linearisierung des Druckers als weitere Möglichkeit einer Charakterisierung durchgeführt werden, indem die prozentualen Schritte des Farbverlaufes für jede der Druckfarben mit den gemessenen Spektraldaten abgestimmt werden.

Die Charakterisierung eines Drucksystems kann somit eine Profilierung und/oder eine Linearisierung umfassen. Gegebenenfalls wird bevorzugt die Linearisierung vor der Profilierung durchgeführt.

Ein Farbmanagementsystem (CMS - Colour Management System) gewährleistet dabei die Kommunikation der Elemente der grafischen Prozesskette untereinander, indem es eine allen gemeinsame Sprache verwendet, Standard ist dabei der Farbraum L*a*b*, der in jedem ICC-Profil integriert ist. L*a*b* ist der Farbraum, der der menschlichen Sicht am nächsten kommt und der in absoluten Werten in einem Koordinatensystem die Farben definiert. Daher formt das Farbmanagement in jeder Bearbeitungsphase die im jeweiligen ICC-Profil integrierten L*a*b*-Werte aller Peripheriegeräte der Kette bis zum endgültigen Druck um. Der Farbmodus L*a*b* ist der Grundpfeiler der ICC-Architektur.

Der L*a*b*-Farbraum ist ein Farbraum, der den Bereich der wahrnehmbaren Farben abdeckt. Der L*a*b*-Farbraum wird durch ein dreidimensionales Koordinatensystem beschrieben. Die L*-Achse beschreibt die Helligkeit (Luminanz) der Farbe mit Werten von 0 (Schwarz) bis 100 (Weiß). Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen. Die Skalen der a*-Achse und der b*-Achse umfassen einen Zahlenbereich von -128 bis +127. Es sind aber auch andere Skalierungen bekannt.

Wird die Repräsentation der Farben im L*a*b*-Raum durchgeführt, so wird bei der Differenzanalyse der Abstand zweier Farben durch den Wert von ΔE bestimmt. ΔE ist ein Maß für den Farbabstand, wobei der "Δ" hierbei als Zeichen der Differenz steht. Damit können farbige Druckergebnisse miteinander verglichen und die Abstände quantifiziert werden. Soll der Abstand zweier Farborte im L*a*b*-Farbraum bestimmt werden, so wird die Wurzel aus der Summe der Quadrate der Abstände der einzelnen Komponenten L*, a* und b* beider Farborte berechnet.

Unabhängig davon, ob der Druckprozess als unterbrochener diskontinuierlicher Einzeldruckvorgang, beispielweise ein blattweiser Druckvorgang, oder als kontinuierlicher ununterbrochener Druckprozess, beispielsweise als Dauerdruck in Form eines Rolle-zu-Rolle Druckprozess, ausgeführt wird, muss das gesamte Drucksystem durch eine Entnahme von mindestens einer Probe profiliert werden.

Kontinuierliche Druckprozesse sind somit durch den Vorgang der Charakterisierung und durch die notwendige manuelle Entnahme der notwendigen Farbchart-Andrucke deutlich in ihrer Effektivität eingeschränkt, da die Profilierung nur diskontinuierlich erfolgen kann.

Aus dem Stand der Technik sind noch die folgenden Techniken bekannt.

Aus der AT 505 556 B1 ist eine Farbanalyse mit einer ortsaufgelösten multispektralen Scan-Technologie offenbart. Dazu werden Reflektanzspektren von Bildbereichen eines Bildes gemessen, in Matrizen eingetragen und mittels mathematischer Funktionen Farbverteilungsmatrizen und Spektralmatrizen bestimmt.

Die WO 2008 080185 A2 offenbart einen Ähnlichkeitsvergleich von zwei Objekten mit Bilddateien, wobei die Ähnlichkeit mit möglichst geringem mathematischen Aufwand berechnet werden kann.

Die AT 504 213 B1 betrifft ebenfalls einen Ähnlichkeitsvergleich, bei dem identische Bildbereiche bestimmt werden. Die Bildbereiche werden mit derselben Funktion analysiert und statistische Verteilungen von Intensitäten werden berechnet. Aus diesen Verteilungen wird ein Maß für die Ähnlichkeit der Bildbereiche abgeleitet.

In der EP 3 578 939 A1 wird eine Online-Qualitätskontrolle beschrieben, die mittels Bildaufnahmen im RGB-Farbraum erfolgt, wobei das Soll-Bild aus einem hyperspektralen Scan ebenfalls als RGB-Bild abgespeichert wird.

Die EP 2 651 112A1 lehrt ein Verfahren zur Verarbeitung von Farbinformationen mit einer Reihe von Schritten. Zunächst werden Referenzdaten eingegeben, die Farbinformationen über jedes Pixel oder jede Pixelgruppe eines Referenzmediums oder eines Auswertungsmediums enthalten. Das Referenzmedium und das Auswertungsmedium sind dabei Druckerzeugnisse und die Referenzdaten und die Auswertungszieldaten werden durch eine Bilderfassung erzeugt. Mit einem Registrierungsprozess werden die eingegebenen Referenzdaten und die Auswertungszieldaten durch eine Bildverarbeitungseinrichtung aufeinander ausgerichtet. Danach wird ein spezifischer Bildbereich festgelegt, der eine Auswertungseinheit bzw. ein Region of Interest darstellt und eine Vielzahl von Pixeln enthält. Schließlich werden die Farbinformationselemente über jedes Pixel oder jede Pixelgruppe in den Referenzdaten und den Auswertungszieldaten in dem eingestellten spezifischen Bereich zum Berechnen einer Farbdifferenz verglichen. Ein Mittelwert wird für jede Pixelgruppe durchgeführt, um ein durchschnittliches Bewertungsergebnis für den spezifischen Bildbereich zu erhalten.

Die WO 2019 147247 A1 offenbart ein Verfahren zur Vorhersage einer zur Neige gehenden Druckerfarbe in einem Drucker mit Drucken von Einzelseiten. Dabei werden ausgehend von der Druckdatei im gescannten Druckbild Pixel mit gleichen Farben zusammengefasst und ausgewertet.

Aus dem Stand der Technik ist weiterhin ein Inline Farbmessungssystem (ICMS-Inline Colour Measurement System) der Firma ipac bekannt, das zur Farbbeurteilung mehrfärbiger Oberflächen eingesetzt wird. Das System weist einen spektralen inline angeordneten Scanner auf, der für verschiedene Materialien (Papier, Folie, Holz, Kunststoff, Keramik, Mineralstoff) und verschiedene Druckverfahren (Tiefdruck, Digitaldruck, Flexodruck, Offsetdruck, Siebdruck) eingesetzt werden kann. Das ICMS ist eine spektrale ortsaufgelöste Scantechnologie zur Messung eines Druckbildes und ist in der Lage, einen durch ein gut trainiertes und gesundes menschliches Auge wahrgenommenen optischen Farbeindruck maschinell nachzuempfinden und den Farbeindruck einer umfassenden objektiven Bewertung zu unterziehen.

Das spektrale Messsystem ist beispielsweise eine multispektrale Kamera mit 12 Bildkanälen pro aufgenommenem Bildpunkt, die pro Bildkanal eine Farbinformation erzeugt. Somit entsteht pro aufgenommenem Bildpunkt (Pixel) ein Farbspektrum aus ca. 10 bis 12 Bildkanälen. Eine übliche Sensortechnik besteht darin, auf einem CMOS Sensor einzelne Pixel mit unterschiedlichen Farbfiltern zu versehen, so dass mit einer Bildaufnahme eine Mehrzahl von spektralen Informationen aus einem aufgenommenen Bildbereich aufgezeichnet werden können.

Das spektrale Messsystem kann auch eine hyperspektrale Kamera sein, bei der pro Bildpunkt mittels einer optischen Einrichtung, beispielsweise mittels eines Prismas, das Licht spektral aufgespalten und mit einzelne spektrale Bereiche separat gemessen werden. Dadurch erhöht sich die spektrale Auflösung gegenüber einer multispektralen Kamera auf ca. 20 bis zu 250 oder mehr Bildkanälen.

Im Gegensatz zu einer herkömmlichen RGB-Kamera wird somit pro Bildpunkt nicht nur eine Farbe, sondern eine spektrale Verteilung mit erheblich mehr Informationstiefe gewonnen. Ein Vergleich von Bildinformationen aus verschiedenen spektralen Aufnahmen wird dann mittels Software durchgeführt. Die Druckdatensätze werden üblicherweise mit einer RIP - Software (Raster Image Prozessor) erstellt, beispielsweise mit den bekannten Software Produkten wie Colorgate, Ergosoft oder Caldera. Eine RIP-Software wird auch von den einzelnen Druckmaschinenhersteller den Anwendern zur Verfügung gestellt.

Daher liegt der vorliegenden Erfindung das technische Problem zugrunde, den Prozess der Charakterisierung allgemein für das Drucken beliebiger digitaler Bilder weiter zu verbessern.

Das zuvor aufgeführte technische Problem wird erfindungsgemäß durch ein Verfahren zur automatisierten Charakterisierung eines kontinuierlichen Drucksystems mit den Merkmalen des Anspruchs 1 gelöst.

Das beschriebene Verfahren besteht in vorteilhafter Weise darin, dass das gedruckte Dekor selbst zur Charakterisierung des Drucksystems verwendet wird und im laufenden Druckprozess eine Steuerung der Chrarakterisierung erfolgen kann.

Dazu kann die multispektrale bzw. hyperspektrale Scantechnologie eingesetzt werden, um in einer Produktionslinie eine musterbasierte Profilierung durchzuführen, bei der keine Farbcharts gedruckt und ausgewertet werden, sondern aus den Farben des aufgedruckten Dekors ein eingeschränkter Farbraum gebildet wird, der mit einem bekannten Referenzfarbraum gleicher Farben verglichen wird.

Bei der musterbasierten Profilierung bzw. Farbindizierung wird ein Ausschnitt (ROI - Region of Interest) des gedruckten Bildes bzw. Dekors, allgemein auch nur Dekor genannt, vermessen. Der Ausschnitt ist bevorzugt repräsentativ für das Dekor im Referenzdekor ausgewählt, so dass vorzugsweise alle dekorbestimmenden Farben in diesem Ausschnitt vorkommen. Aus der Messung des gleichen Ausschnittes im gedruckten Dekor und im Vergleich mit dem Ausschnitt des Referenzdekors wird dann auf ähnliche Weise wie mit einem Farbchart eine Charakterisierung des Druckers durchgeführt und eine Charakterisierungsdatei erstellt. Dazu werden Pixel mit ähnlicher Farbe zusammengefasst und dann wie ein zusammenhängendes Farbfeld eines Farbcharts behandelt. Mit dieser Information kann dann die neue Charakterisierungsdatei erstellt werden.

In vorteilhafter Weise wird somit kein Ausschuss produziert, da die gemessene Fläche zum gedruckten Bild bzw. Dekor gehört. Des Weiteren kommen die Farben, die zur Profilierung benutzt werden, im gedruckten Bild bzw. Dekor vor. Damit erhält man eine detailreichere Charakterisierung des Farbraumes, der für das Bild bzw. Dekor ausschlaggebend ist.

Das beschriebene Verfahren kann mit unterschiedlichen Drucksystemen durchgeführt werden, beispielsweise Digitaldrucksysteme, Tiefdrucksystems, Flexodrucksysteme, Offsetdrucksysteme und Siebdrucksysteme. Jedes dieser Drucksysteme ist zumindest insoweit steuerbar, dass die gedruckten Farben steuerbar sind und durch ein Farbmanagementsystem veränderbar ist. Im Bereich der Digitaldrucksysteme finden auch Multipass-Drucksysteme und Singlepass-Drucksysteme Anwendung.

Bei einer bevorzugten Ausgestaltung des beschriebenen Verfahrens werden für jedes Dekor mindestens zwei oder mehrere unterschiedliche Ausschnitte (ROIs) für die Erstellung der Referenzchartdateien und entsprechend zwei oder mehrere Ausschnitte des gedruckten Bildes bzw. Dekors spektral vermessen. Somit wird insbesondere bei unregelmäßigen Dekoren sichergestellt, dass alle Farben des eingeschränkten Farbraums erfasst werden. Darüber hinaus können auf einem Trägermaterial unterschiedliche Dekore aufgedruckt werden, für die dann jeweils mindestens ein Ausschnitt vermessen wird.

Insbesondere für Single-Pass-Drucksysteme für die Erzeugung von Dekoren mit einer großen Breite werden in der Regel mindestens zwei, vorzugsweise mehrere Druckeinheiten nebeneinander angeordnet, die angrenzend zueinander oder auch überlappend das Dekor drucken. Dabei können die verschiedenen Druckeinheiten bei Anwendung der gleichen Charakterisierungsdateien zur Drucksteuerung zu - wenn auch nur geringfügig - unterschiedlichen Druckergebnissen führen. Daher ist es vorliegend weiter bevorzugt, dass bei der Benutzung von mehr als einer Druckeinheit für jede Druckeinheit separat für jedes Dekor mindestens zwei oder mehrere unterschiedliche Ausschnitte (ROIs) für die Erstellung der Referenzchartdateien und entsprechend zwei oder mehrere Ausschnitte des gedruckten Bildes bzw. Dekors spektral vermessen werden. Dadurch wird es ermöglicht, die verschiedenen Drucker eines Single-Pass-Drucksystems einzeln mit dem Farbmanagementsystem anzupassen. Unter einer Druckeinheit wird bevorzugt ein Druckkopf verstanden, wobei ein Drucker zwei oder mehr Druckeinheiten aufweist. Unter eine Druckeinheit kann auch jeweils nur ein Drucker verstanden werden.

Das Verfahren kann auch bei mehreren baugleichen Druckeinheiten angewendet werden, die auf das gleiche Substrat das gleiche Dekor drucken. In diesem Fall wird nur auf einer Druckeinheit eine Charakterisierung mittels Profilierung und/oder Linearisierung durchgeführt. Diese Charakterisierung dann für die weiteren baugleichen Druckeinheiten verwendet. Des Weiteren kann dann auf den jeweiligen baugleichen Druckeinheiten eine weitere dekorspezifische Charakterisierung mit dem Verfahren durchgeführt wird.

Vor einem Druckvorgang, vorzugsweise vor jedem kontinuierlichen Druckvorgang, wird das mindestens eine Dekor als mindestens ein Referenzmuster unter vorgegebenen Referenzbedingungen gedruckt. Anschließend wird das Referenzmuster spektral gescannt und die Referenzbilddaten werden gespeichert. Zudem werden aus den digitalen Originaldaten des Dekors, also der digitalen Druckdatei, Graustufenbilddaten für die einzelnen Farbkanäle (CMYK) und vorzugsweise auch RGB-Bilddaten erzeugt und als Contone-Dateien gespeichert. Unter den Graustufenbilddaten werden die Intensitätswerte jedes Farbkanals (CMYK) verstanden, mit denen die jeweilige Farbe zum Druck eines Bildelementes beiträgt.

Die gespeicherten Daten werden anschließend für die Charakterisierung des Drucksystems verwendet.

Der Farbraum (CMYK) ist der gängige Farbraum, der insbesondere von Digitaldruckern eingesetzt wird. Dieser Farbraum wird im Folgenden exemplarisch für alle Farbräume mit einzelnen Farbkanälen verwendet und ist nicht einschränkend zu verstehen.

Weiterhin werden die spektral gemessenen Referenzbilddaten des Ausschnitts (ROI) des Referenzmusters in den L*a*b*-Farbraum transformiert. Die dazu erforderlichen Rechenregeln sind bekannt und beispielsweise in der Norm ISO 11664-4:2008, Colorimetry - Part 4: CIE 1976 L*a*b* Colour space und den darin zitierten weiteren Teilen der Norm veröffentlicht.

Des Weiteren wird der L*a*b*-Farbraum in Untermengen in Form von Bins mit, vorzugsweise einheitlicher, Kantenlänge mit Hilfe von dreidimensionalen Farbhistogrammen unterteilt. Je größer dabei die Größe der Untermengen bzw. Bins ist, desto ungenauer ist die anschließende Farbzuordnung. Sind die Untermengen dagegen zu klein, dann ergeben sich zu geringe Anzahlen von zugeordneten Referenzbilddaten bzw. Pixeln in den einzelnen Untermengen. Eine bevorzugte Größe der Untermengen bzw. Bins beträgt zwei Einheiten bei einem L*a*b*-Farbraum mit einem Wertebereich jeder Koordinate zwischen -128 und +127. Jede Untermenge entspricht dabei einem Farbfeld eines virtuellen Farbcharts.

Für jedes Pixel der Referenzbilddaten erfolgt anhand des jeweiligen L*a*b-Wertes eine Zuordnung in die Untermengen des L*a*b*-Farbraums, wobei für jede Zuordnung die Pixelkoordinaten im Ausschnitt als zusätzliche Daten gespeichert werden. Somit werden die Pixel mit ähnlichen Farbwerten in den jeweiligen Untermengen zusammengefasst und können als Untermenge weiter verarbeitet werden.

Nach Abschluss der Zuordnung, also nachdem alle Pixel der spektral gemessenen und in den L*a*b-Farbraum transformierten Referenzbilddaten den Untermengen zugeordnet worden sind, werden die Untermengen nach der Anzahl der zugeordneten Pixel, vorzugsweise absteigend, sortiert und, vorzugsweise aufsteigend, mit Indexwerten, vorzugsweise mit natürlichen Zahlen, indiziert. Somit wird jedem Pixel der spektral gemessenen und transformierten Referenzbilddaten ein Index zugeordnet.

Weiterhin wird in einem Array einer Indexmaske für jedes Pixel der Referenzbilddaten des Ausschnitts (ROI) der Indexwert der Zuordnung zu einer Untermenge eingeschrieben. Die Indexmaske wird dann bei der nachfolgenden wiederholten Vermessung von gedruckten Dekoren eingesetzt und stellt ein zentrales Werkzeug für das Verfahren dar.

In bevorzugter Weise wird das Verfahren weiter dadurch verbessert, dass vor der Sortierung und Indizierung der Untermengen in den Untermengen, die eine Anzahl von zugeordneten Pixeln unterhalb einer prozentualen oder absoluten Schwelle aufweisen, die Anzahl der Pixel auf Null gesetzt wird. Dadurch werden Untermengen bzw. diesen Untermengen zugeordnete Pixel, die wegen der geringen Anzahl nur einen geringen Einfluss auf das Dekor haben, bei der weiteren Charakterisierung des Drucksystems durch diese Filterung unterdrückt.

Bei dem oben beschrieben Verfahren wird dann in bevorzugter Weise im Schritt a) die spektral gemessenen Referenzbilddaten des Ausschnitts (ROI) des Referenzmusters und die die Graustufenbilddaten der Farbkanäle (CMYK) der Contone-Dateien zueinander registriert, also durch Verschieben, Verdrehen oder Verzerren der Pixelmatrizen aufeinander ausgerichtet.

Anschließend werden entsprechend der Indexmaske die Referenzbilddaten und die Graustufenbilddaten der Farbkanäle für jeden Indexwert gemittelt und gespeichert. Dazu werden an allen Positionen bzw. Pixeln der Referenzbilddaten und der Graustufenbilddaten, denen der gleiche Index zugeordnet worden ist, die Farbwerte bzw. Grauwerte gemittelt.

Die gemittelten Referenzbilddaten werden entsprechend der Index-Maske für jeden Index als jeweils ein Farbfeld eines virtuellen Farbcharts im L*a*b*-Farbraum als Referenzchartdatei gespeichert und die gemittelten Graustufenbilddaten werden entsprechend der Index-Maske für jeden Index als jeweils ein Farbfeld eines virtuellen Farbcharts im Farbraum der Farbkanäle (CMYK) gespeichert. Somit werden zur Berechnung der Referenzchartdatei Pixel der gemessenen spektralen und transformierten Referenzbilddaten mit ähnlicher Farbe zusammengefasst und dann wie ein zusammenhängendes Farbchart behandelt.

Des Weiteren werden im Schritt c) des oben beschriebenen Verfahrens die spektral gemessenen Dekorbilddaten des Ausschnitts (ROI) des gedruckten Dekors in den L*a*b*-Farbraum transformiert und die Dekorbilddaten des Ausschnitts (ROI) des gedruckten Dekors und die Referenzbilddaten des Ausschnitts (ROI) werden zueinander registriert. Wie zuvor bei der Erstellung des Referenzchartdatei werden entsprechend der Indexmaske die Dekorbilddaten und die für das Drucken des Dekors verwendeten Graustufenbilddaten der Farbkanäle für jeden Indexwert gemittelt und die gemittelten Dekorbilddaten werden für jeden Index als jeweils ein Farbfeld eines virtuellen Farbcharts im L*a*b*-Farbraum als Farbchartdatei gespeichert. Zusätzlich werden entsprechend der Index-Maske die gemittelten Graustufenbilddaten für jeden Index als jeweils ein Farbfeld eines virtuellen Farbcharts im Farbraum der Farbkanäle (CMYK) gespeichert. Somit wird die aktuelle Farbchartdatei für die Charakterisierung des Drucksystems auf der Basis der spektral gemessenen, registrierten, indizierten und gemittelten Dekorbilddaten erstellt, ohne dass ein separater Farbchart gedruckt wird. Das Dekor wird somit in dem für das Dekor relevanten reduzierten Farbraum durch sich selbst charakterisiert.

Weiterhin wird im Schritt e) eine Charakterisierungsdatei erzeugt, die auf der Basis der Farbabstände zwischen den gemittelten Dekorbilddaten der indizierten Farbfelder der Farbchartdatei und dem gemittelten Referenzbilddaten der indizierten Farbfelder der Referenzchartdatei und ausgehend von den gemittelten für das Drucken des Dekors verwendeten Graustufenbilddaten der Farbkanäle geänderte Graustufenbilddaten der Farbkanäle aufweist. Somit kommen die Referenzchartdatei, die durch die Referenzbilddaten des Ausschnitts eines vorab gedruckten Referenzmusters erzeugt wird, und die Farbchartdatei, die durch die Dekorbilddaten des entsprechenden Ausschnitts des aktuell gedruckten Dekors erzeugt wird, zur Anwendung. Damit werden dann, wenn die Differenzanalyse eine zu große Abweichung des Farbabstandes von einem vorgegebenen Toleranzwert ermittelt worden ist, die entsprechenden Graustufenbilddaten der Farbkanäle berechnet und zur weiteren Charakterisierung des Drucksystems verwendet.

Mithilfe der musterbasierten Farbindizierung kann weiterhin eine Closed-Loop Color Correction realisiert werden. Dazu greifen die folgenden Komponenten automatisiert ineinander: Drucksteuerung, Messtechnik, Farbindizierung und Farbmanagement.

Erst dadurch, dass ein Ausschnitt des Bildes bzw. Dekors inline vermessen wird, kommt es zu keiner Unterbrechung im Regelkreis. Der Druck kann durchgehend kontrolliert werden, und bei zu großen Veränderungen zum Referenzbild wird über die Charakterisierungsdatei als Farbindex das Farbmanagement angesteuert. Das Farbmanagement korrigiert somit durch eine Veränderung des Drucksystems den Ausdruck.

Ein wichtiger Aspekt des beschriebenen Verfahrens liegt darin, dass aus den digitalen Bilddaten Farbcharts bzw. Farbprofile berechnet werden und auf Basis dieser ("virtuellen") Farbcharts dann die weitere Verarbeitung erfolgt, ohne dass ein Farbchart selbst in gedruckter Form vorliegt. Mit anderen Worten kommt das Verfahren ohne das Drucken und Vermessen eines separaten Farbcharts aus.

Das beschriebene Verfahren basiert also darauf, dass multispektrale, hochaufgelöste Bilddaten, die vorzugsweise mit einer Auflösung von größer oder gleich 80dpi in den La*b*-Farbraum transformiert werden, dass dort eine Unterteilung des Farbraumes in Untermengen mit Hilfe von dreidimensionalen Farbhistogrammen erfolgt, dass jedes Element der Untermenge einem Farbfeld eines virtuellen Farbcharts entspricht und dass zu jedem Element die Pixelkoordinaten eindeutig festgehalten werden.

Ein so gewonnenes Farbchart, welches neben der Farbinformation auch die Ortsinformation der Vorlage enthält, kann zur quantitativen Auswertung von Bildfolgen herangezogen werden und ermöglicht so die automatische Regelung eines Farbdrift und/oder die Bestimmung von Ähnlichkeitsmaßen zur Qualitätsbeurteilung und Toleranzüberwachung im Prozess.

Die Closed-Loop Color Correction ermöglicht somit Änderungen im Druckprozess zu erkennen und über Color-Management-Korrekturen diesen Änderungen entgegen zu wirken. Die Besonderheit dabei ist, dass dafür nicht die üblichen Color Charts mit gedruckt werden müssen. Die Änderungs-Informationen werden über das Vermessen von Dekorausschnitten gewonnen. Dazu wird ein als Referenzmuster ("Urmuster") festgelegter Ausschnitt (ROI) laufend mit deckungsgleichen Ausschnitten aus später gedruckten Produktionen verglichen und die Unterschiede daraus ausgewertet.

Die Differenzanalyse wird vorzugsweise so durchgeführt, dass für zumindest einen Teil der Farbfelder, vorzugsweise für alle Farbfelder des Referenz-Farbcharts und des aktuell gedruckten Farbcharts der Farbabstand ΔE im L*a*b*-Farbraum ermittelt wird. Aus den einzelnen Farbabständen kann dann für jedes Farbfeld separat die Differenz bestimmt und mit einem Toleranzwert oder mit farbabhängigen separaten Toleranzwerten vergleichen werden. Bei zu großen Abweichungen vom Toleranzwert werden dann mit einer neuen Charakterisierungsdatei die entsprechenden Farbdruckeinstellungen korrigiert.

Des Weiteren kann auch die Summe der Farbabstände ausgewählter oder aller Farbflächen als Maß für die Abweichung der verglichen Farbcharts berechnet und dann mit einem vorgegebenen Toleranzwert verglichen werden. Ebenso kann ein Mittelwert, ein Medianwert oder eine andere statistische Größe aus einer Mehrzahl von Farbdifferenzen berechnet und mit einem vorgegebenen Toleranzwert verglichen werden.

Während des Ablaufs des Verfahrens werden die Verfahrensschritte b) bis d) mindestens einmal, bei Bedarf aber so oft ohne Unterbrechung des erfindungsgemäßen Verfahrens und des Druckvorgangs wiederholt, bis der vorgegebene Toleranzwert zwischen der Referenzchartdatei und der aktuellen Farbchartdatei unterschritten wird.

Das erfindungsgemäße Verfahren optimiert daher den bekannten Prozess der Charakterisierung des Drucksystems, vorzugsweise im gesamten verfügbaren Farbraum, für das Drucken beliebiger digitaler Bilder in Form diverser Dateiformate, vom JPEG bis zum TIFF-Format, wobei der heute bekannte manuelle Arbeitsschritt der Charakterisierung von Drucksystemen durch einen automatisierten Charakterisierungsprozess ersetzt wird und damit effektiver und schneller durchführbar ist.

Das spektrale Scannen des mindestens einen für die Charakterisierung benötigten Ausschnitts des gedruckten Dekors erfolgt unmittelbar inline in der Produktionslinie, also während des Druckprozesses. Die so erzeugten Scandaten stehen sofort und unmittelbar der Bildauswertungssoftware zur Differenzanalyse zur Verfügung.

Das erfindungsgemäße Verfahren kann daher ohne das Eingreifen und das bislang notwendige Know How einer Person durchgeführt werden und liefert genaue und stetig gleiche Ergebnisse. Dadurch wird Zeit eingespart, weil keine Farbcharts mehr bearbeitet bzw. ausgewertet werden müssen. Weder Zuschneiden noch manuelles Einscannen sind mehr notwendig und entfallen als manuelle Einzelschritte.

Die Referenzchartdatei wird zu Beginn des Verfahrens unter Verwendung der gleichen Scan-Technologie und insbesondere mit demselben Scanner erstellt. Damit ist sichergestellt, dass sowohl die Soll-Daten als auch die Ist-Daten unter gleichen Bedingungen generiert wurden und die Vergleichbarkeit gegeben ist.

Wenn eine neue Charakterisierungsdatei generiert wird, wird diese auf den Drucker übertragen oder bei nachfolgenden Druckaufträgen zusammen mit den eigentlichen Druckdateien in Kombination übertragen. Die Charakterisierungsdateien werden als Druckdatensätze üblicherweise mit einer Differenzanalysesoftware als Teil einer sogenannten RIP-Software (RIP - Raster Image Prozessor) erstellt, beispielsweise mit einer Software von Colorgate, Ergosoft oder Caldera.

Das beschriebene Verfahren kann mit einem beliebigen Drucker, insbesondere mit einem Zeilendrucker durchgeführt werden, wobei der Drucker die gesamte Breite des Trägermaterials während der Bewegung bedruckt. Alternativ dazu kann auch ein Drucker zum Einsatz kommen, bei dem der Druckkopf quer zur Transportrichtung hin- und her bewegt wird. Zudem können Single-Pass-Drucker und Multipass-Drucker zum Einsatz kommen. Bei Single-Pass-Drucksystemen können auch mehr als eine Druckereinheit eingesetzt werden.

Für das erfindungsgemäße Verfahren wird eine geeignete, bevorzugt die oben beschriebene spektrale Scan-Technologie als Messsystem eingesetzt, die bevorzugt auch für kontinuierliche Druckprozesse auch bei höheren Vorschubgeschwindigkeiten geeignet ist. Die zu erzeugenden Scandaten sollen bevorzugt hohe Auflösungen von beispielsweise 90 dpi oder mehr ermöglichen. Die die IPAC-ICMS Scantechnologie ist eine bekannte und geeignete Scan-Technologie, die oben beschrieben worden ist und die eine multispektrale oder hyperspektrale Scantechnologie zur Messung darstellt.

Als Messsystem kommt alternativ zur ICMS-Scantechnologie auch eine Anordnung von Einzelspektrometern in geeigneter Inline-Anordnung in Frage, die kontinuierlich Farbflächen von Farbcharts vermessen und die Ergebnisse der Auswertesoftware zur Verfügung stellen. Eine solche Anordnung von Einzelspektrometern oder sogar nur ein einzelnes Spektrometer kann beispielsweise als Messsystem genutzt werden, um die erwähnten randständigen Farbflächen zu vermessen.

Bei einer weiteren vorteilhaften Ausbildung des beschriebenen Verfahrens wird das Drucken des Dekors und das Messen mit der spektralen Scantechnologie kontinuierlich mit einer Wiederholungsfrequenz von mindestens einem Scan pro Minute, bevorzugt mindestens einem Scan pro 30 Sekunden oder besonders bevorzugt, mindestens einem Scan pro 10 Sekunden durchgeführt. Somit bedeutet kontinuierlich im Sinne des beschriebenen Verfahrens eine Scanhäufigkeit der Wiederholungsaufnahmen in einem Zeitraum ohne sonstige Unterbrechung in den beschriebenen Geschwindigkeiten.

Weiterhin kann bei dem Verfahren eine Auflösung des Scanners von mindestens 32 dpi, bevorzugt von mindestens 72 dpi, besonders bevorzugt von mindestens 90 dpi verwendet wird. Somit werden ausreichend hohe Auflösungen erreicht, um die verschiedenen Farbfelder der Farbcharts voneinander zu trennen.

Weiterhin können mit dem beschriebenen Verfahren Bahngeschwindigkeiten des Trägermaterials beispielsweise von mindestens 1 Meter pro Minute bis zu 300 Meter pro Minute oder mehr verwendet werden. Die hohen Geschwindigkeiten stellen im Gegensatz zu den bisherigen manuellen Profilierungen eine große Verbesserung dar.

Das Verfahren kann mit einer Reihe von unterschiedlichen Druckfarben, beispielsweise Solvent Tinten, Latex Tinten, UV-Tinten, wässrig pigmentierten Tinten und auf unterschiedlichen Trägermaterialien wie Papier, Pappe, Kunststoffen, Holzwerkstoffen, Textilien, beispielsweise Stoffe oder Teppiche, Metall, Glas, Keramik oder Kork durchgeführt werden.

Im Folgenden wird die Erfindung anhand eines Ausführungsbeispiels mit Bezug auf die Zeichnung erläutert. In der Zeichnung zeigen
- Fig. 1: ein Flussdiagramm, das ein erfindungsgemäßes Verfahren beschreibt,
- Fig. 2: eine erste Anlage zur Durchführung eines erfindungsgemäßen Verfahrens,
- Fig. 3: eine zweite Anlage zur Durchführung eines erfindungsgemäßen Verfahrens,
- Fig. 4: eine dritte Anlage zur Durchführung eines erfindungsgemäßen Verfahrens,
- Fig. 5: eine schematische Darstellung eines Verfahrens zum Erzeugen der Referenzdateien,
- Fig. 6: eine schematische Darstellung eines Verfahrens zum Erzeugen von dreidimensionalen Farbhistogrammen und einer Index-Maske und
- Fig. 7: eine schematische Darstellung eines Farbmanagements unter Verwendung einer Index-Maske nach Fig. 6.

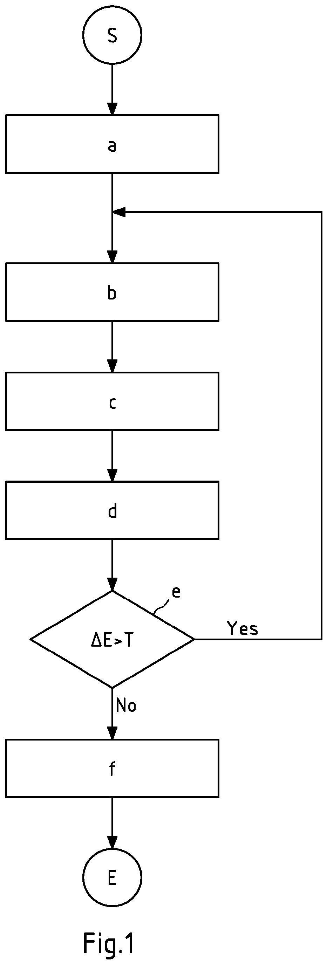

Fig. 1 zeigt ein erfindungsgemäßes Verfahren zur automatisierten Charakterisierung eines kontinuierlichen Digitaldrucksystems anhand eines Flussdiagramms.

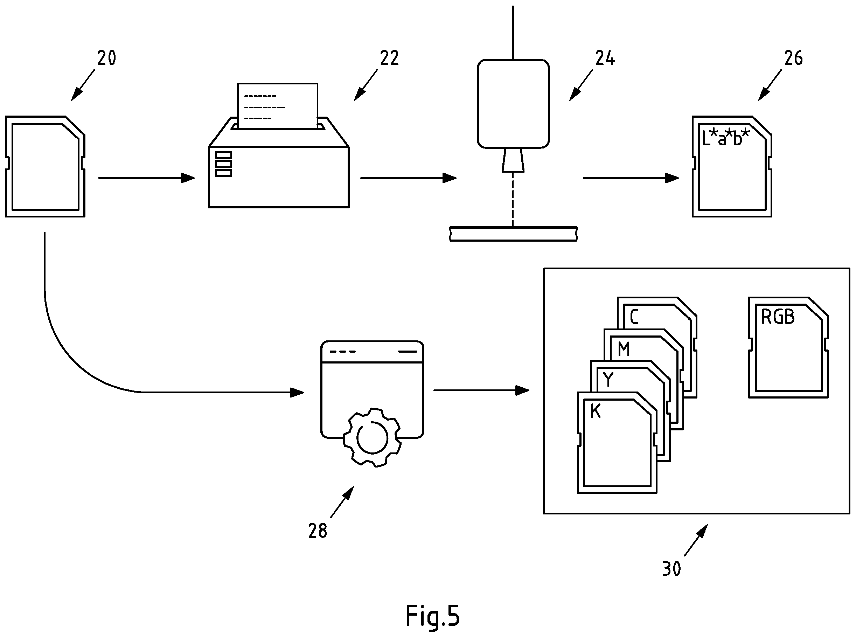

Nach dem Start S des Verfahrens wird zunächst in Schritt a für mindestens ein Dekor jeweils mindestens eine Referenzchartdatei für einen Ausschnitt (ROI - region of interest) eines Referenzmusters durch ein spektrales Messsystem gemessen, erzeugt und im Digitaldrucksystem gespeichert. Die mindestens eine Referenzchartdatei wird im nachfolgenden Verfahren als Referenz verwendet, um die Einstellungen des Drucksystems zu charakterisieren. Die mindestens eine Referenzchartdatei wird dabei mit Hilfe eines Speichers in einer Steuer- und Regeleinrichtung des Drucksystems abgelegt. Der Speicherort kann dabei in dem eigentlichen Drucker und/oder in einem separaten Steuer- und Regelgerät abgelegt sein. Die Referenzchartdatei bzw. die Referenzchartdateien werden in der nachfolgend anhand der weiteren Figuren 5 bis 7 erläuterten Weise erstellt.

Unter einem spektralen Messsystem werden solche Messsysteme verstanden, mit denen pro aufgenommenem Bildpunkt (Pixel), beispielsweise eines CMOS-Sensors, eine spektrale Analyse durchgeführt wird und somit ein Spektrum pro Bildpunkt (Pixel) aufgenommen wird. Das Spektrum ist in sogenannte Bildkanäle aufgeteilt und die Anzahl der Bildkanäle liegt zwischen 10 und Werten von über 200.

Die spektrale Analyse wird dabei zum Beispiel mit wechselnden Filtern oder fest installierten Farbfiltern pro sensitivem Messpunkt eines Bildsensors durchgeführt. Ein solches Messsystem wird auch multispektrales Messsystem genannt. Des Weiteren kann das vom Bildpunkt stammendes Licht spektral durch ein optisches Element, beispielsweise ein Prisma, zerlegt und von einer Reihe von Messpunkten (Pixeln) aufgenommen werden. Ein solches Messsystem wird auch als hyperspektrales Messsystem genannt und weist in Regel mehr Bildkanäle pro Messpunkt als multispektrale Messsysteme auf.

Im nächsten Schritt b erfolgt dann das Drucken von mindestens einem Dekor auf ein Trägermaterial, wobei ein kontinuierliches Digitaldruck-Verfahren eingesetzt wird. Unter einem kontinuierlichen Druckverfahren wird dabei ein Druckverfahren verstanden, bei dem ein ununterbrochener Druck auf einem Trägermaterial über eine große Längserstreckung durchgeführt wird. Beispiele dafür sind das kontinuierliche Bedrucken von Plattenmaterial aus der Möbel- und Fußbodenherstellung, wobei das Plattenmaterial anschließend aufgeteilt wird. Ein kontinuierliches Druckverfahren wird auch bei der Herstellung von Kantenbändern für Möbelplatten oder bei Dekorpapieren für Möbelplatten oder Fußbodenpaneelen angewendet. Außerhalb der Möbelindustrie werden kontinuierliche Druckverfahren beispielsweise auch in der Printmedienherstellung oder der Bekleidungsherstellung angewendet. Dem stehen diskontinuierliche Druckprozesse mit einem Bedrucken einzelner Trägermaterialien, beispielsweise von einzelnen Blätter Papier, gegenüber.

Im Schritt c wird der im Referenzmuster festgelegte Ausschnitt (ROI) als Teil des gedruckten Dekors durch ein spektrales Messsystem gemessen und eine Farbchartdatei erzeugt. Die Farbchartdatei bzw. die Farbchartdateien werden in der nachfolgend anhand der weiteren Figuren 5 bis 7 erläuterten Weise erstellt. Der Ausschnitt des Referenzdekors und der Ausschnitt im gedruckten Dekor sind inhaltsgleich und dienen einem Vergleich der daraus gewonnen Farbinformationen.

Im Schritt d werden dann die zuvor erzeugte Farbchartdatei und die Referenzchartdatei einer Differenzanalyse unterzogen. Dazu werden die korrespondierenden Farbfelder der Referenzchartdatei und der Farbchartdatei im L*a*b*-Farbraum miteinander verglichen. Dafür wird wiederum der Abstand ΔE der beiden Farbpunkte als Wurzel aus der Summe der Quadrate der Abstände der einzelnen Komponenten L*, a* und b* beider Farborte berechnet.

Im Schritt e wird dann, wenn mittels der Differenzanalyse eine zu große Abweichung des Farbabstands ΔE von einem vorgegebenen Toleranzwert T ermittelt wird, auf Basis der Referenzchartdatei und der Differenzanalyse mindestens eine Charakterisierungsdatei generiert und nach Anwendung der Charakterisierungsdatei zur Profilierung und/oder Linearisierung des Druckersystems die Schritte b bis d erneut angewendet.

Die Bestimmung der Abweichung des Farbabstands erfolgt dabei bevorzugt pro Farbfeld mit einer Differenzbildung des Wertes von ΔE mit einem Toleranzwert T, so dass gegebenenfalls pro Farbfeld eine Änderung in der Charakterisierungsdatei hinterlegt werden kann.

Die Bestimmung der Abweichung des Farbabstands kann auch für eine vorbestimmte Anzahl von Messpunkten mit einer Differenzbildung der Summe oder des Mittelwertes der Werte ΔE mit einem Toleranzwert T erfolgen. Somit kann gegebenenfalls auch für mehrere Messpunkte einer Farbfläche oder für Farbbereiche mit Farbfeldern mit unterschiedlichen Farbnuancen und nicht nur für einzelne Farbwerte eine Änderung der Charakterisierungsdatei hinterlegt werden.

Die Schritte b bis d werden dann solange wiederholt, bis eine vorgegebene Anzahl von Farbabständen ΔE, Summen oder Mittelwerten von ΔE oder alle Farbabstände ΔE den Toleranzwert erfüllen.

Wenn die Bedingung in Schritt e nicht erfüllt ist, wenn also mittels der Differenzanalyse eine Abweichung geringer als ein vorgegebener Toleranzwert ermittelt wird, dann wird im Schritt f der Druckvorgang mit der aktuellen Charakterisierung fortgesetzt. Dadurch wird ein möglichst gutes und mit dem Referenzbild übereinstimmendes Druckbild erreicht.

Das Verfahren endet dann bei E, bevor es durch einen vorgegebenen oder von den Druckergebnissen oder anderen Umständen abhängigen Anlass erneut durchgeführt wird.

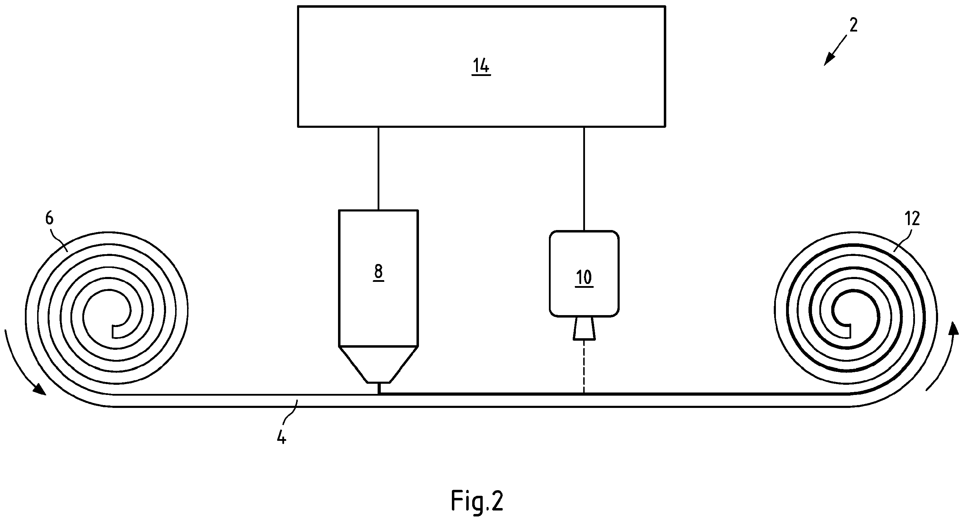

Fig. 2 zeigt eine erste Anlage 2 zur Durchführung des Verfahrens zur automatisierten Charakterisierung eines kontinuierlichen Digitaldrucksystems. Zunächst wird das Trägermaterial 4 von einer ersten Rolle 6 abgerollt, unterhalb des Digitaldruckers 8 und des spektralen Messsystems 10 geführt und dann wieder auf einer Rolle 12 aufgerollt. Insoweit kann man von einem endlosen Trägermaterial 4 sprechen, mit dem das kontinuierliche Drucken und Charakterisieren durchgeführt wird. Dabei ist selbstverständlich, dass das endlose Band eine endliche, aber große Länge aufweist.

Die Ergebnisse der spektralen Messungen durch das spektrale Messsystem werden einer Steuer- und Charakterisierungseinrichtung 14 übertragen, die wiederum nicht nur die Druckdateien oder andere Steuerungsdateien, sondern auch die Charakterisierungsdateien auf den Digitaldrucker 8 überträgt.

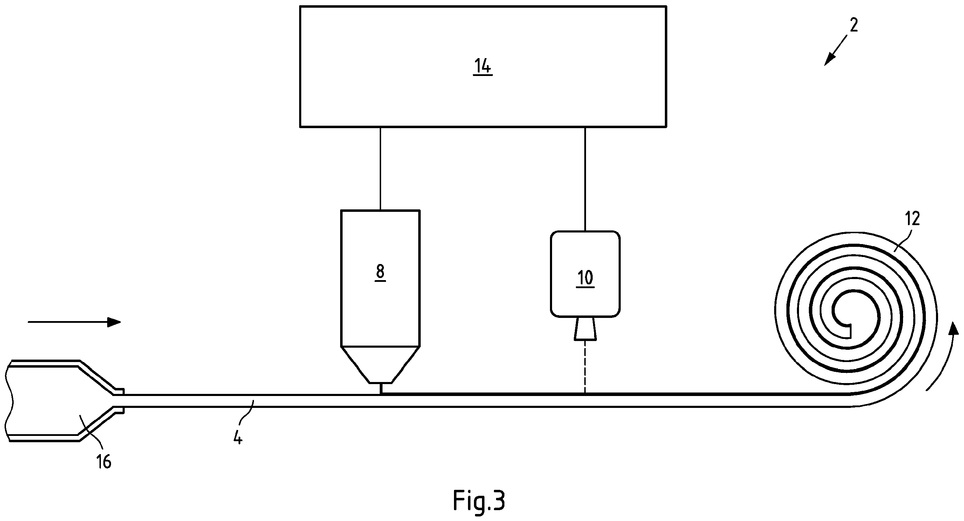

Fig. 3 zeigt eine zweite Anlage 2 zur Durchführung des Verfahrens zur automatisierten Charakterisierung eines kontinuierlichen Digitaldrucksystems. Im Vergleich zur Anlage nach Fig. 2 wird das Trägermaterial 4 nicht von einer Rolle abgewickelt, sondern durch eine Extrusionsprozess hergestellt. Dazu ist schematisch ein Extrusionswerkzeug 16 dargestellt, aus dem ein Strang zur Herstellung beispielsweise eines Kantenmaterials für die Anwendung bei Möbelplatten extrudiert wird. Grundsätzlich notwendige Kalander und Abkühlstationen sind hier der Einfachheit wegen nicht dargestellt. Anstelle des Extrusionswerkzeugs 16 kann auch eine Stranggussvorrichtung eingesetzt werden, um einen kontinuierlichen Strang an Trägermaterial zu erzeugen.

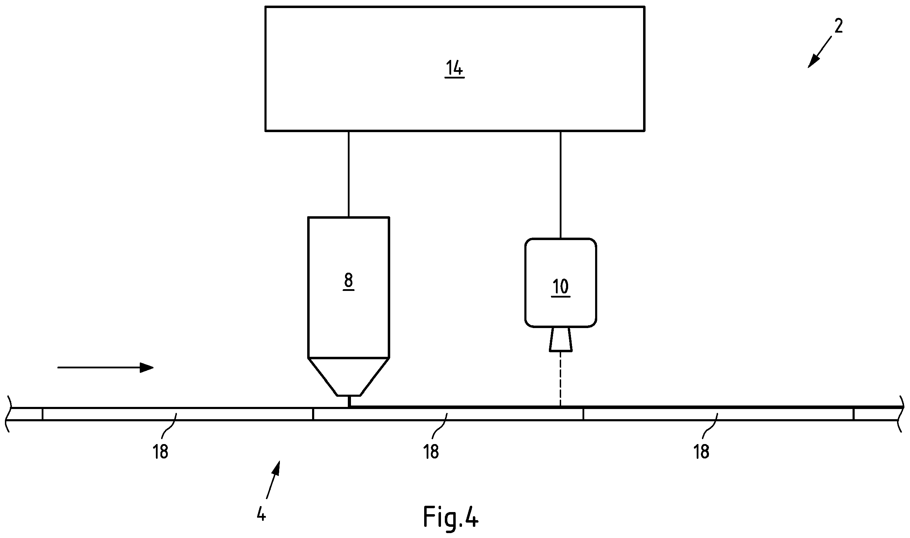

Fig. 4 zeigt eine dritte Anlage 2 zur Durchführung des Verfahrens zur automatisierten Charakterisierung eines kontinuierlichen Digitaldrucksystems. Im Vergleich zu den Anlagen nach den Fig. 2 und 3 ist das Trägermaterial 4 nicht als endloses Material ausgebildet, sondern besteht aus einer Vielzahl von aneinander anstoßenden Elementen 18, beispielsweise Platten oder Blättern. Das Trägermaterial 4 besteht also aus einzelnen Elementen 18, die vor und nach dem Bedrucken separat vorliegen. Das kontinuierliche Drucken und Messen von Farbcharts erfolgt dann auf dem aus einzelnen Elementen 18 zusammengesetzten Trägermaterial 4.

In den Fig. 5 bis 7 wird der Ablauf eines Verfahrens zur automatisierten Charakterisierung eines kontinuierlichen Digitaldrucksystems sowie als Teil davon ein Verfahren zur Herstellung einer Farbchartdatei zur Charakterisierung eines Digitaldrucksystems dargestellt und nachfolgend beschrieben. Dabei wird das Verfahren für einen Ausschnitt (ROI) beschrieben, wenn mehr als ein Ausschnitt (ROI) bearbeitet werden soll, dann wird das nachfolgende Verfahren für jeden Ausschnitt durchgeführt.

Fig. 5 zeigt den ersten Schritt, bei dem ausgehend von einer Originaldatei 20 des Dekors das mindestens eine Dekor auf einem Referenzdrucker 22 als mindestens ein Referenzmuster unter vorgegebenen Referenzbedingungen gedruckt. Danach wird das Referenzmuster spektral mittels eines spektralen, insbesondere multispektralen oder hyperspektralen Scanners 24 gescannt. Die derart spektral gemessenen Referenzbilddaten eines vorgegebenen Ausschnitts ROI (Region of Interest) des Referenzmusters werden in den L*a*b*-Farbraum, vorzugsweise in den CIE L*a*b*-Farbraum, transformiert und als L*a*b*-Datei 26 gespeichert. In dem ersten Schritt wird also das Referenzmuster des Ausschnitts, das auch als Urmuster bezeichnet werden kann, mit allen benötigten Daten im L*a*b-Farbraum, in den C, M, Y, K-Farbkanälen und im RGB-Farbraum festgelegt.

Dabei ist das CIE-Normfarbsystem ein Farbsystem, das von der Internationalen Beleuchtungskommission (CIE - Commission internationale de l'eclairage) definiert wurde, um eine Relation zwischen der menschlichen Farbwahrnehmung (Farbe) und den physikalischen Ursachen des Farbreizes (Farbvalenz) herzustellen. Es erfasst die Gesamtheit wahrnehmbarer Farben.

Parallel dazu werden aus den digitalen Originaldaten des Dekors, gespeichert als Datei 20, mittels einer Bildbearbeitungssoftware, dargestellt als Block 28, Graustufenbilddaten für die einzelnen Farbkanäle (CMYK) und RGB-Bilddaten als RGB-Datei erzeugt und als Contone-Dateien (C, M, Y, K und RGB) 30 gespeichert.

Damit die L*a*b*-Datei mit den Contone-Dateien des jeweiligen Ausschnittes aufeinander ausgerichtet und somit registriert werden können, werden die diese in einem Berechnungsschritt in Block 28 in die Bildauflösung der Scandaten umgerechnet. Somit werden die RGB-Datei und die Graustufenbilder der einzelnen Farbkanäle (CMYK) des digitalen Originals in Scanauflösung erzeugt und als oben genannte Contone-Dateien gespeichert. Die Graustufenbilddaten, oder alternativ auch die RGB-Daten für eine Bearbeitung an einem Bildschirm, werden für die Registrierung, also die gegenseitige Ausrichtung zueinander, herangezogen. Die Graustufenbilder der einzelnen Kanäle werden dann für die weitere Datenverarbeitung genutzt. Das Color Management hält bei der Berechnung im Block 28 auch die Referenzbedingungen des Ausdrucks mit dem Referenzdrucker 22 fest, um die nachfolgende Charakterisierung des Farbsystems zu ermöglichen.

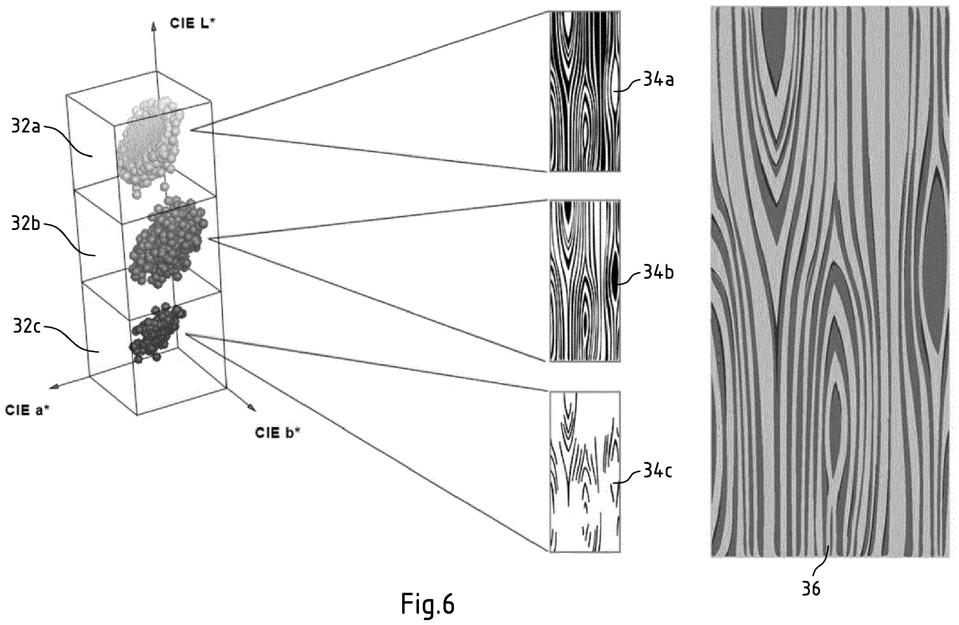

Den nächsten Schritt der Bearbeitung der Referenzbilddaten zeigt Fig. 6.

Für die Steuerung des Inline-Druckprozesses ist das Ziel, eine Beurteilung der Veränderungen des Druckprozesses zu errechnen. Dazu wird der erwähnte Ausschnitt ROI innerhalb des Referenzmusterscans herangezogen. Dieser besteht im Normalfall beispielsweise aus 500 x 1.000 Pixeln bei einer Scanauflösung von ca. 200 dpi. Beim Arbeiten auf dieser Pixel-Ebene ergeben sich 500.000 Farbinformationen pro ROI. Diese Fülle an Daten bedeutet einen hohen Rechenaufwand, der durch das weiter beschriebene Verfahren verringert werden kann. Außerdem ergeben sich durch Sub-Pixel-Fehler beim Scannen und in der Registrierung nicht bis ins Detail verlässliche Daten.

Wie in Fig. 6 dargestellt ist, wird der CIE L*a*b*-Farbraum mit den drei Achsen CIE L*, CIE a* und CIE b* in Untermengen in Form von Bins mit einheitlicher Kantenlänge, vorzugsweise also in würfelförmige Untermengen unterteilt, wobei exemplarisch drei aneinander grenzende Untermengen 32a, 32b und 32c dargestellt sind. Jede Untermenge entspricht somit einem Farbfeld eines virtuellen Farbcharts, wobei durch die Kantenlänge der Untermengen im Farbraum jede Untermenge eine vorgegebene Menge an möglichen Farbwerten aufweist.

Die Unterteilung in die Untermengen ermöglicht das Erstellen von dreidimensionalen Farbhistogrammen. Dazu erfolgt für jedes Pixel der Referenzbilddaten anhand des jeweiligen L*a*b-Wertes eine Zuordnung in eine der Untermengen des L*a*b*-Farbraums, wobei für jede Zuordnung die Pixelkoordinaten im Ausschnitt des Dekors als zusätzliche Daten gespeichert werden. Die zugeordneten Pixel sind in Fig. 6 als kleine Kugeln in den einzelnen Untermengen 32a, 32b und 32c dargestellt. Die geringfügig unterschiedlichen Positionen innerhalb der Untermengen 32a, 32b und 32c in dem dreidimensionalen Farbraum verdeutlichen jeweils geringfügig unterschiedliche Farbwerte. Die Menge an Pixeln führt zu einer Punktewolke innerhalb der Untermengen 32a, 32b und 32c.

Nach Abschluss der Zuordnung aller Pixel des gescannten und in den L*a*b*-Farbraum transferierten Ausschnitts ROI wird festgestellt, wieviele Pixel vom Farbwert her in welche Untermenge 32a, 32b und 32c eingruppiert worden sind. Somit ergibt sich eine Häufigkeitsverteilung an Zuordnungen in die Farbraum-Untermengen gebildet, die auch als dreidimensionales Farbhistogramm im L*a*b*-Farbraum bezeichnet werden kann.

Danach werden die Untermengen nach der Anzahl der zugeordneten Pixel absteigend sortiert und aufsteigend mit Indexwerten mit natürlichen Zahlen mit 1 beginnend indiziert.

Durch eine Abbildung der Indexwerte für alle Pixel in einem Array ergibt sich eine Indexmaske. Das Array in Größe des ROIs wird zunächst mit Nullen gefüllt. Anschließend wird für jedes Pixel der Referenzbilddaten der Indexwert der Zuordnung zu einer Untermenge in die entsprechende Bildposition eingeschrieben. Jedem Pixel der Indexmaske des Ausschnitts ROI wird somit ein Index als Zuordnung zu einer der Untermenge 32a, 32b und 32c des L*a*b*-Farbraums zugeordnet. In Fig. 6 sind für die drei Untermengen 32a, 32b und 32c seitlich für den Index der jeweiligen Untermenge ein Array 34a, 34b und 34c der als schwarz-weiß Darstellung abgebildet. Übereinander gelagert ergibt sich dann aus den drei Arrays die Index-Maske 36, wobei die unterschiedlichen Graustufen in der Index-Maske jeweils den Indexwerten der drei Untermengen 32a, 32b und 32c entsprechen.

Anzumerken ist, dass die Darstellung vereinfachend ist. Denn die benachbart angeordneten Untermenge 32a, 32b und 32c werden sich in einem realistischen Fall nur wenig im Farbwert unterscheiden. Daher ist der dargestellte Kontrastunterschied zwischen den Untermengen zur Veranschaulichung stark erhöht worden.

Mit der Indexmaske wird somit die Möglichkeit geschaffen, in einfacher Weise zu bestimmen, welche Pixel aus dem Ausschnitt ROI des Referenzbildes und jedes später im Verlauf des Verfahrens eingescannten Dekors zu welcher Untermenge, also zu welcher Farbgruppe zugeordnet sind.

In vorteilhafter Weise wird vor der Sortierung und Indizierung der Untermengen im L*a*b*-Farbraum, in den Untermengen, die eine Anzahl von zugeordneten Pixeln unterhalb einer prozentualen oder absoluten Schwelle aufweisen, die Anzahl der Pixel auf Null gesetzt wird. Somit wird nur eine geringe Anzahl von Farbwerten einzelner Pixel, die nur unwesentlich zur Farbgestaltung des Dekors beitragen, bei der weiteren Berechnung von Unterschieden in verschiedenen gescannten Bildern berücksichtigt. Eine prozentuale Schwelle kann beispielsweise bei 0,1 % liegen. Dadurch wird das Verfahren vereinfacht und beschleunigt.

Die zuvor beschriebene und in einem Vorbereitungsschritt erzeugte Index-Maske für den Ausschnitt ROI wird bei dem eingangs genannten Verfahren zur automatisierten Charakterisierung eines kontinuierlichen Digitaldrucksystems in der folgenden Weise eingesetzt. Dabei wird im Folgenden das Verfahren für einen Ausschnitt erläutert, werden zwei oder mehr Ausschnitte des Dekors oder unterschiedlicher Dekore verwendet, wo wird das Verfahren jeweils für alle Ausschnitte durchgeführt.

Bei dem im Zusammenhang mit Fig. 1 beschriebenen Verfahren wird im Schritt a) die spektral gemessenen Referenzbilddaten des Ausschnitts ROI(26) des Referenzmusters 26 und die dem ROI(26) entsprechenden Graustufenbilddaten der Farbkanäle (CMYK) ROI(30c, 30m, 30y, 30k) der Contone-Dateien zueinander registriert, wie im Zusammenhang mit Fig. 5 beschrieben worden ist.

Zudem wird für den Ausschnitt des Referenzmusters eine Index-Maske 36 erzeugt, wie es im Zusammenhang mit Fig. 6 erläutert worden ist.

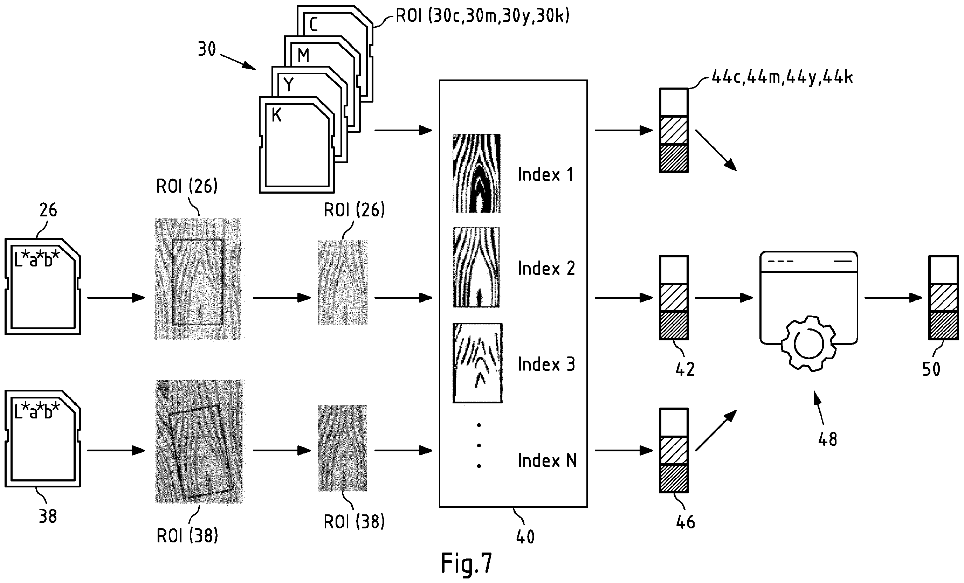

In Fig. 7 werden die weiteren Schritte dargestellt, wie eine Charakterisierungsdatei ermittelt werden kann.

Zunächst werden für die Verwirklichung des Schrittes a) in den L*a*b*-Referenzbilddaten 26 und in aktuellen L*a*b*-Dekorbilddaten 38 eines aktuell, bevorzugt inline, gescannten Dekordruckes zunächst im Dekor übereinstimmende Ausschnitte ROIs(26) und ROI(38) identifiziert und zueinander ausgerichtet, also registriert. Die den L*a*b*-Referenzbilddaten 26 zugeordneten CMYK-Graustufenbilddaten werden in gleicher Weise analysiert und zu jedem Farbkanal ein ROI(30,c, 30m, 30y, 30k) erzeugt.

Auf die Referenzbilddaten ROI(26) und auf die Graustufenbilddaten ROI(30,c, 30m, 30y, 30k) der Farbkanäle wird die Index-Maske angewendet und jeweils die Untermengen von Pixeln mit gleichem Index ermittelt. Die Werte der Pixel jedes ROI(26) und ROI(30,c, 30m, 30y, 30k) werden für jeden Index mathematisch gemittelt. Beispielsweise werden alle Pixel, die an Positionen im ROI mit Index 1 stehen, gemittelt, sowohl in den L*a*b*-Referenzbilddaten ROI(26) als auch in den C-/M-/Y-/K-Graustufenbildern ROI(30c, 30m, 30y, 30k).

Die gemittelten L*a*b*-Werte bzw. die gemittelten Graustufenwerte sind für drei Indizes 1 bis 3 exemplarisch in Fig. 7 in dem Block 40 dargestellt, das Muster des ROIs ist mit unterschiedlich angeordneten Linien zu erkennen, wobei jedes der drei Darstellungen einem Farbwert bzw. Grauwert oder Graustufe entspricht und mit der Darstellung der Arrays 34a, 34b und 34c aus Fig. 6 vergleichbar ist. Mit Index N wird angedeutet, dass in der Regel zahlreiche Indizes vorhanden sind, abhängig von der Ausgestaltung des Dekors. N ist dabei ein oberer Index, wobei der Wert des oberen Index unterschiedlich groß sein kann.

Die gemittelten Referenzbilddaten werden anschließend entsprechend der Index-Maske für jeden Index als jeweils ein Farbfeld eines virtuellen Farbcharts 42 im L*a*b*-Farbraum als Referenzchartdatei 42 gespeichert und die gemittelten Graustufenbilddaten entsprechend der Index-Maske für jeden Index als jeweils ein Farbfeld eines virtuellen Farbcharts 44c, 44m, 44y, 44k im Farbraum der Farbkanäle CMYK gespeichert. Damit erhält man für jeden Index auch eine Zuweisung der CMYK Graustufenbilddaten ROI(30c, 30m, 30y, 30k) zu den L*a*b-Referenzbilddaten ROI(26).

Im Schritt b) des Verfahrens werden die spektral gemessenen Dekorbilddaten des Ausschnitts ROI(38) des gedruckten Dekors in den L*a*b*-Farbraum transformiert und anschließend werden die Dekorbilddaten des aktuell gescannten Ausschnitts ROI(38) des gedruckten Dekors und die Referenzbilddaten ROI(26) zueinander registriert.

Des Weiteren werden entsprechend der Indexmaske die registrierten Dekorbilddaten ROI(38) und die für das Drucken des Dekors verwendeten Graustufenbilddaten ROI(30c, 30m, 30y, 30k) der Farbkanäle für jeden Indexwert gemittelt. Die CMYK-Graustufendaten entsprechen zu Beginn des Verfahrens den Graustufenbilddaten, die sich aus dem ursprünglichen Contone-Dateien ergeben. In späteren Zeitpunkten des Verfahrensablaufs entsprechen die Graustufenbilddaten den gegebenenfalls inzwischen angepassten Graustufenbilddaten zur Ansteuerung des Druckers.

Anschließend werden die gemittelten Dekorbilddaten ROI(38), dargestellt im Block 40 der Fig. 7, für jeden Index als jeweils ein Farbfeld eines virtuellen Farbcharts 46 im L*a*b*-Farbraum als Farbchartdatei gespeichert und ebenso werden entsprechend der Index-Maske die gemittelten Graustufenbilddaten ROI(30c, 30m, 30y, 30k) für jeden Index als jeweils ein Farbfeld eines virtuellen Farbcharts 44c, 44m, 44y, 44k im Farbraum der Farbkanäle (CMYK) gespeichert werden.

Für die nachfolgende Auswertung und gegebenenfalls Ermittlung einer neuen Charakterisierungsdatei stehen dem in Block 48 dargestellten Differenzanalyse die folgenden Daten zur Verfügung:
- Referenzfarbchart 42 aus den gemittelten Referenzbilddaten ROI(26),
- Farbcharts 44c, 44m, 44y, 44k aus den gemittelten Graustufenbilddaten ROI(30) als aktuelle Druckparameter und
- Farbchart 46 aus dem aktuell gescannten Dekorbilddaten ROI(38).

Im Schritt e) wird die Differenzanalyse im Block 48 der Fig. 7 auf der Basis der Farbcharts 42 und 46 durchgeführt und in der oben beschriebenen Weise die Größe einer Abweichung des Farbabstands der gemittelten L*a*b*-Farbwerte durch einen Vergleich einer vorgegebenen Anzahl, vorzugsweise aller Farbflächen der Farbcharts 42 und 46 ermittelt.

Wenn die Abweichung des Farbabstands größer als ein Toleranzwert ist, siehe Merkmal e), dann wird eine Charakterisierungsdatei erzeugt, die auf der Basis der Farbabstände zwischen den gemittelten Dekorbilddaten der indizierten Farbfelder der Farbchartdatei 46 und dem gemittelten Referenzbilddaten der indizierten Farbfelder der Referenzchartdatei 42 und ausgehend von den gemittelten für das Drucken des Dekors verwendeten Graustufenbilddaten der Farbcharts 44c, 44m, 44y, 44k der Farbkanäle C, M, Y, K geänderte Graustufenbilddaten 50 der Farbkanäle aufweist.

Die geänderten Graustufenbilddaten 50 werden dann als Teil der Charakterisierungsdatei durch das Farbmanagementsystem an den Drucker weitergeleitet und der nachfolgende Druck des Dekors erfolgt auf der Basis der geänderten Graustufenbilddaten der Farbkanäle CMYK.

Durch das beschriebene Verfahre kann dann eine Closed-Loop Farbkorrektur (Color Correction) mittels der Drucksteuerung, der Messtechnik, der Farbindizierung und der Farbmanagements durchgeführt werden, so dass in einem Inline-Druckprozess das Farbmanagement beschleunigt und dadurch verbessert werden.

## Patentansprüche

1. Verfahren zur automatisierten Charakterisierung eines kontinuierlichen Drucksystems,
a) bei dem mindestens ein Dekor anhand von digitalen Originaldaten als mindestens ein Referenzmuster unter vorgegebenen Referenzbedingungen gedruckt wird,
- bei dem jeweils mindestens ein Ausschnitt des Referenzmusters festgelegt wird,
- bei dem der mindestens eine Ausschnitt des Referenzmusters spektral gescannt wird und die Referenzbilddaten gespeichert werden,
- bei dem aus den digitalen Originaldaten des Dekors Graustufenbilddaten für die einzelnen Farbkanäle und gegebenenfalls RGB-Bilddaten erzeugt und als Contone-Dateien gespeichert werden,
- bei dem die spektral gemessenen Referenzbilddaten des Ausschnitts .des Referenzmusters in den L*a*b*-Farbraum transformiert werden,
- bei dem der L*a*b*-Farbraum in Untermengen in Form von Bins mit, vorzugsweise einheitlicher, Kantenlänge mit Hilfe von dreidimensionalen Farbhistogrammen unterteilt wird,
- bei dem jede Untermenge einem Farbfeld eines virtuellen Farbcharts entspricht,
- bei dem für jedes Pixel der Referenzbilddaten anhand des jeweiligen L*a*b-Wertes eine Zuordnung in die Untermengen des L*a*b*-Farbraums erfolgt, wobei für jede Zuordnung die Pixelkoordinaten im Ausschnitt als zusätzliche Daten gespeichert werden,
- bei dem nach Abschluss der Zuordnung die Untermengen nach der Anzahl der zugeordneten Pixel, vorzugsweise absteigend, sortiert werden und, vorzugsweise aufsteigend, mit Indexwerten, vorzugsweise mit natürlichen Zahlen, indiziert werden,
- bei dem in einem Array einer Indexmaske für jedes Pixel der Referenzbilddaten der Indexwert der Zuordnung zu einer Untermenge eingeschrieben wird,
- bei dem die spektral gemessenen Referenzbilddaten des Ausschnitts des Referenzmusters und die die Graustufenbilddaten der Farbkanäle der Contone-Dateien zueinander registriert werden,
- bei dem die Referenzbilddaten und die Graustufenbilddaten der Farbkanäle für jeden Indexwert gemittelt werden,
- bei dem die gemittelten Referenzbilddaten entsprechend der Index-Maske für jeden Index als jeweils ein Farbfeld eines virtuellen Farbcharts im L*a*b*-Farbraum als Referenzchartdatei gespeichert werden und
- bei dem die gemittelten Graustufenbilddaten entsprechend der Index-Maske für jeden Index als jeweils ein Farbfeld eines virtuellen Farbcharts im Farbraum der Farbkanäle gespeichert werden,
b) bei dem das mindestens eine Dekor auf ein Trägermaterial im kontinuierlichen Digitaldruck-Verfahren gedruckt wird,
c) bei dem der im Referenzmuster festgelegte Ausschnitt als Teil des gedruckten Dekors durch ein spektrales Messsystem vermessen und aus den spektralen Messdaten Dekorbilddaten erzeugt werden,
- bei dem die spektral gemessenen Dekorbilddaten des Ausschnitts des gedruckten Dekors in den L*a*b*-Farbraum transformiert werden,
- bei dem die Dekorbilddaten des Ausschnitts des gedruckten Dekors und die Referenzbilddaten des Ausschnitts zueinander registriert werden,
- bei dem entsprechend der Indexmaske die Dekorbilddaten und die für das Drucken des Dekors verwendeten Graustufenbilddaten der Farbkanäle für jeden Indexwert gemittelt werden,
- bei dem die gemittelten Dekorbilddaten für jeden Index als jeweils ein Farbfeld eines virtuellen Farbcharts im L*a*b*-Farbraum als Farbchartdatei gespeichert werden und
- bei dem entsprechend der Index-Maske die gemittelten Graustufenbilddaten für jeden Index als jeweils ein Farbfeld eines virtuellen Farbcharts im Farbraum der Farbkanäle als Farbchartdatei gespeichert werden,
d) bei dem die Farbchartdatei und die Referenzchartdatei einer Differenzanalyse unterzogen werden, die auf der Basis der Farbabstände zwischen den gemittelten Dekorbilddaten der indizierten Farbfelder der Farbchartdatei und den gemittelten Referenzbilddaten der indizierten Farbfelder der Referenzchartdatei durchgeführt wird,
e) bei dem dann, wenn mittels der Differenzanalyse eine zu große Abweichung des Farbabstands von einem vorgegebenen Toleranzwert ermittelt wird, auf Basis der Referenzchartdatei und der Differenzanalyse mindestens eine Charakterisierungsdatei generiert wird,
- bei dem die Charakterisierungsdatei ausgehend von den gemittelten für das Drucken des Dekors verwendeten Graustufenbilddaten der Farbkanäle geänderte Graustufenbilddaten der Farbkanäle aufweist, und
- bei dem nach Anwendung der Charakterisierungsdatei zur Profilierung und/oder Linearisierung des Druckersystems die Schritte b) bis d) erneut angewendet werden, und
f) bei dem dann, wenn mittels der Differenzanalyse eine Abweichung geringer als ein vorgegebener Toleranzwert ermittelt wird, der Druckvorgang mit der aktuellen Charakterisierung fortgesetzt wird.

2. Verfahren nach Anspruch 1,
bei dem für jedes Dekor mindestens zwei oder mehrere unterschiedliche Ausschnitte für die Erstellung der Referenzchartdateien und entsprechend zwei oder mehrere Ausschnitte des gedruckten Bildes bzw. Dekors spektral vermessen werden.

3. Verfahren nach Anspruch 1 oder 2,
bei dem bei der Benutzung von mehr als einer Druckeinheit für jede Druckeinheit separat für jedes Dekor mindestens zwei oder mehrere unterschiedliche Ausschnitte für die Erstellung der Referenzchartdateien und entsprechend zwei oder mehrere Ausschnitte des gedruckten Bildes bzw. Dekors spektral vermessen werden.

4. Verfahren nach einem der Ansprüche 1 bis 3,
bei dem vor der Sortierung und Indizierung der Untermengen in den Untermengen, die eine Anzahl von zugeordneten Pixeln unterhalb einer prozentualen oder absoluten Schwelle aufweisen, die Anzahl der Pixel auf Null gesetzt wird.

5. Verfahren nach einem der Ansprüche 1 bis 4,
bei dem eine Closed-Loop Farbkorrektur mittels der Drucksteuerung, der Messtechnik, der Farbindizierung und der Farbmanagements durchgeführt wird.

## Claims

1. Method for the automated characterisation of a continuous printing system,
a) in which at least one pattern is printed on the basis of original digital data as at least one reference pattern under predetermined reference conditions,
- in which at least one section of the reference pattern is defined in each case,
- in which the at least one section of the reference pattern is spectrally scanned and the reference image data is stored,
- in which greyscale image data for the individual colour channels and, if necessary, RGB image data are generated from the original digital data of the decor and stored as contone files,
- in which the spectrally measured reference image data of the section of the reference pattern is transformed into the L*a*b* colour space,
- in which the L*a*b* colour space is divided into subsets in the form of bins with, preferably uniform, edge lengths with the aid of three-dimensional colour histograms,
- in which each subset corresponds to a colour field of a virtual colour chart,
- in which each pixel of the reference image data is assigned to the subsets of the L*a*b* colour space on the basis of the respective L*a*b* value, with the pixel coordinates in the section being stored as additional data for each assignment,
- in which, after completion of the assignment, the subsets are sorted according to the number of assigned pixels, preferably in descending order, and indexed, preferably in ascending order, with index values, preferably with natural numbers,
- in which the index value of the assignment to a subset is written into an array of an index mask for each pixel of the reference image data,
- in which the spectrally measured reference image data of the section of the reference pattern and the greyscale image data of the colour channels of the contone files are registered in relation to each other,
- in which the reference image data and the greyscale image data of the colour channels are averaged for each index value,
- in which the averaged reference image data corresponding to the index mask for each index is saved as a colour field of a virtual colour chart in the L*a*b* colour space as a reference chart file, and
- in which the averaged greyscale image data is stored in accordance with the index mask for each index as in each case one colour field of a virtual colour chart in the colour space of the colour channels,
b) in which the at least one pattern is printed on a carrier material in a continuous digital printing process,
c) in which the section defined in the reference pattern is measured as part of the printed decor by a spectral measurement system and decor image data is generated from the spectral measurement data,
- in which the spectrally measured decor image data of the section of the printed decor is transformed into the L*a*b* colour space,
- in which the decor image data of the section of the printed decor and the reference image data of the section are registered in relation to each other,
- in which the decor image data and the greyscale image data of the colour channels used for printing the decor are averaged for each index value in accordance with the index mask,
- in which the averaged decor image data for each index is stored as a colour field of a virtual colour chart in the L*a*b* colour space as a colour chart file, and
- in which, according to the index mask, the averaged greyscale image data for each index is stored as a colour field of a virtual colour chart in the colour space of the colour channels as a colour chart file,
d) in which the colour chart file and the reference chart file are subjected to a difference analysis which is carried out on the basis of the colour distances between the averaged decor image data of the indexed colour patches of the colour chart file and the averaged reference image data of the indexed colour patches of the reference chart file,
e) in which at least one characterisation file is generated based on the reference chart file and the difference analysis if an excessive deviation of the colour distance from a predetermined tolerance value is determined by means of the difference analysis,
- in which the characterisation file has modified greyscale image data of the colour channels based on the averaged greyscale image data of the colour channels used for printing the decoration, and
- in which, after application of the characterisation file for profiling and/or linearisation of the printer system, steps b) to d) are applied again, and
f) in which, if a deviation less than a predetermined tolerance value is determined by means of the difference analysis, the printing process is continued with the current characterisation.

2. Process according to claim 1,
in which for each decoration at least two or more different sections are spectrally measured for the creation of the reference chart files and correspondingly two or more sections of the printed image or decoration.

3. Method according to claim 1 or 2,
in which, when using more than one printing unit for each printing unit, at least two or more different sections are spectrally measured separately for each decor for the creation of the reference chart files and correspondingly two or more sections of the printed image or decor.

4. Method according to one of claims 1 to 3,
in which, before sorting and indexing the subsets in the subsets having a number of associated pixels below a percentage or absolute threshold, the number of pixels is set to zero.

5. Method according to any one of claims 1 to 4,
in which a closed-loop colour correction is performed by means of the print control, the measurement technology, the colour indexing and the colour management.

## Revendications

1. Procédé pour caractérisation automatisée d'un système d'impression en continu,
a) dans lequel au moins un décor est imprimé à l'aide de données numériques originales comme au moins un échantillon de référence dans des conditions de référence prédéfinies,
- dans lequel au moins une section de l'échantillon de référence est déterminée à chaque fois,
- dans lequel l'au moins une section de l'échantillon de référence est scannée par voie spectrale et les données d'image de référence sont mémorisées,
- dans lequel des données d'image en niveaux de gris pour les canaux individuels de couleur et, le cas échéant, des données d'image RVB sont générées à partir des données numériques originales du décor et sont enregistrées sous forme de fichiers contones,
- dans lequel les données d'image de référence mesurées spectralement de la section de l'échantillon de référence sont transformées dans l'espace chromatique L*a*b*,
- dans lequel l'espace chromatique L*a*b* est divisé en sous-ensembles sous forme de bines de longueur de bord, de préférence uniforme, à l'aide d'histogrammes de couleur tridimensionnels,
- dans lequel chaque sous-ensemble correspond à un champ de couleur d'une charte de couleurs virtuelle,
- dans lequel, pour chaque pixel des données d'image de référence, une affectation dans les sous-ensembles de l'espace chromatique L*a*b* est effectuée à l'aide de la valeur L*a*b respective, les coordonnées de pixel dans la section étant enregistrées comme données supplémentaires pour chaque affectation,
- dans lequel, une fois l'affectation terminée, les sous-ensembles sont triés, de préférence par ordre décroissant, en fonction du nombre de pixels affectés et sont indexés, de préférence par ordre croissant, avec des valeurs d'index, de préférence avec des nombres naturels,
- dans lequel la valeur d'index de l'affectation à un sous-ensemble est inscrite dans un tableau d'un masque d'index pour chaque pixel des données d'image de référence,
- dans lequel les données d'image de référence mesurées spectralement de la section de l'échantillon de référence et les données d'image en niveaux de gris des canaux de couleur des fichiers contone sont enregistrées les unes par rapport aux autres,
- dans lequel les données d'image de référence et les données d'image en niveaux de gris des canaux de couleur sont moyennées pour chaque valeur d'index,
- dans lequel les données d'image de référence moyennées sont enregistrées en fonction du masque d'index pour chaque index sous forme d'un champ de couleur respectif d'une charte de couleurs virtuelle dans l'espace chromatique L*a*b* en tant que fichier de charte de référence, et
- dans lequel les données d'image en niveaux de gris moyennées sont mémorisées en fonction du masque d'index pour chaque index en tant que champ de couleur respectif d'une charte de couleurs virtuelle dans l'espace chromatique des canaux de couleurs,
b) dans lequel l'au moins un décor est imprimé sur un matériau de support par un procédé d'impression numérique continu,
c) dans lequel la section définie dans l'échantillon de référence est mesurée en tant que partie du décor imprimé, au moyen d'un système de mesure spectrale et des données d'image de décor sont générées à partir des données de mesure spectrales,
- dans lequel les données d'image de décor de la section du décor imprimé, mesurées de manière spectrale, sont transformées dans l'espace chromatique L*a*b*,
- dans lequel les données d'image de décor de la section du décor imprimé et les données d'image de référence de la section sont enregistrées les unes par rapport aux autres,
- dans lequel, en fonction du masque d'index, les données d'image de décor et les données d'image en niveaux de gris des canaux de couleur utilisées pour l'impression du décor sont moyennées pour chaque valeur d'index,
- dans lequel les données d'image de décor moyennées pour chaque valeur d'index sont enregistrées sous forme d'un champ de couleur d'une charte de couleurs virtuelle dans l'espace chromatique L*a*b* en tant que fichier de charte de couleurs et
- dans lequel, en fonction du masque d'index, les données d'image en niveaux de gris moyennées sont mémorisées pour chaque index sous forme d'un champ de couleur respectif d'une charte de couleurs virtuelle dans l'espace chromatique des canaux de couleurs comme fichier de charte de couleurs,
d) dans lequel le fichier de charte de couleurs et le fichier de charte de référence sont soumis à une analyse de différence qui est effectuée sur la base des écarts de couleur entre les données d'image de décor moyennes des champs de couleur indexés du fichier de charte de couleurs et les données d'image de référence moyennées des champs de couleur indexés du fichier de charte de référence,
e) dans lequel, lorsqu'un écart trop important de la distance de couleur par rapport à une valeur de tolérance prédéfinie est déterminé au moyen de l'analyse de différence, au moins un fichier de caractérisation est généré sur la base du fichier de charte de référence et de l'analyse de différence,
- dans lequel le fichier de caractérisation présente, à partir des données d'image en niveaux de gris moyennées des canaux de couleur utilisées pour l'impression du décor, des données d'image en niveaux de gris modifiées des canaux de couleur, et
- dans lequel, après utilisation du fichier de caractérisation pour le profilage et/ou la linéarisation du système d'impression, les étapes b) à d) sont à nouveau appliquées, et
f) dans lequel, lorsqu'un écart inférieur à une valeur de tolérance prédéterminée est déterminé au moyen de l'analyse de différence, le processus d'impression est poursuivi avec la caractérisation actuelle.

2. Procédé selon la revendication 1,
dans lequel, pour chaque décor, au moins deux ou plusieurs sections différentes sont mesurées spectralement pour la création des fichiers de charte de référence et, de manière correspondante, deux ou plusieurs sections de l'image ou du décor imprimé.

3. Procédé selon la revendication 1 ou 2,
dans lequel, en cas d'utilisation de plus d'une unité d'impression pour chaque unité d'impression, séparément pour chaque décor au moins deux ou plusieurs sections différentes sont mesurées spectralement pour la création des fichiers de charte de référence et, de manière correspondante, deux ou plusieurs sections de l'image ou du décor imprimé.

4. Procédé selon l'une des revendications 1 à 3,
dans lequel, préalablement au tri et à l'indexation des sous-ensembles dans les sous-ensembles, lesquels sous-ensembles présentent un nombre de pixels associés inférieur à un seuil exprimé en pourcentage ou en valeur absolue, le nombre de pixels est mis à zéro.

5. Procédé selon l'une quelconque des revendications 1 à 4,
dans lequel une correction de couleur en boucle fermée est effectuée au moyen de la commande d'impression, de la technique de mesure, de l'indexation des couleurs et de la gestion des couleurs.
